# EUROPEAN PATENT APPLICATION

(11) **EP 2 775 706 A1**
(43) Date of publication of application: **10.09.2014**
(21) Application number: 12845647.2
(22) Date of filing: 26.10.2012
(51) Int. Cl.: H04N 7/173, H04H 20/28, H04H 60/13, H04H 60/82

(54) **INFORMATION PROCESSING DEVICE, INFORMATION PROCESSING METHOD, AND PROGRAM**

(30) Priority: 01.11.2011 JP 2011240368
(71) Applicant: Sony Corporation, Tokyo 108-0075 (JP)
(72) Inventor: KITAHARA, Jun, Tokyo 108-0075 (JP); KITAZATO, Naohisa, Tokyo 108-0075 (JP)
(74) Representative: Witte, Weller & Partner Patentanwälte mbB
(86) International application number: PCT/JP2012/006880
(87) International publication number: WO 2013/065274

(57) **Abstract**

[Object]

To expand end control of an application related to a broadcast content.

[Solving Means]

In an information processing system capable of controlling an application related to a broadcast content by an AIT, "SUSPEND" is newly added to a set of application control codes of an ETSI standard. By executing "SUSPEND", a new function of setting an application from an executed state to a pause state can be added. As a result, control involving storing a processing result up to an application end point and resuming processing while taking over the past processing result when the application is activated next time can be realized.

## Description

### [Technical Field]

The present disclosure relates to an information processing apparatus, an information processing method, and a program with which an application related to a broadcast content can be executed using an application management table.

### [Background Art]

In recent years, a technique that enables an application delivered via a network such as the Internet to be executed simultaneous with a reproduction of a broadcast content has been known. As such a technique, a technique called hybrid broadcast broadband TV (hereinafter, referred to as "HbbTV") is known. As a standard of HbbTV, "ETSI TS 102 796" (see Non-patent Literature 1) has been developed in Europe. Further, the standard "ARIB STD-B23" (see Non-patent Literature 2) conforming thereto has been developed also in our country.

### [Citation List]

### [Non Patent Literature]

[Non Patent Literature 1]
   ETSI (European Telecommunications Standards Institute) "ETSI TS 102 796 V1.1.1 (2010-06)" http://www.etsi.org/deliver/etsi_ts/102700_102799/102796/01.01.01_60/ts_102796 v010101p.pdf (browsed on October 21, 2011)
[Non Patent Literature 2]
   Association of Radio Industries and Businesses "Application execution environment standard ARIB STD-B23 1.2 in digital broadcast" http://www.arib.or.jp/english/html/overview/doc/2-STD-B23v1_2.pdf (browsed on October 21, 2011)

### [Summary]

### [Technical Problem]

For example, in a system in which an application is executed simultaneous with a reproduction of a broadcast content as in HbbTV, a life cycle of an application from an activation to an end is managed by a data structure called AIT (Application Information Table) superimposed on a broadcast content. An information terminal that has acquired the AIT controls the application based on an application control code included in the AIT.

Moreover, according to the ETSI standard, an application to be executed simultaneous with a reproduction of a broadcast content can be switched as follows. For example, a switch from an application A to an application B involves ending the application A being executed by an application control code "DESTROY" or "KILL" and activating the new application B by an application control code "AUTOSTART".

However, when the application is ended by the application control code "DESTROY" or "KILL", the whole application and a state of the application being executed are deleted from a memory, which specifically means that the application is activated only from an initial state every time. However, depending on required processing, there is a case where a processing result obtained up until an end point of the application is wished to be stored so that the processing can be resumed while taking over the past processing result when the application is activated next time. For example, in a case of an application capable of changing a display screen by a user operation, if a screen that the user has viewed right before ending the application can be displayed as an initial screen at the time the application is activated next time, time and effort required for an operation to look for a screen that the user wishes to view at every activation can be eliminated. In the ETSI standard, however, control involving storing a processing result obtained up to an application end point and resuming processing while taking over the past processing result when the application is activated next time is not assumed.

In view of the circumstances as described above, an object of the present disclosure is to provide an information processing apparatus, an information processing method, and a program with which end control of an application related to a broadcast content can be expanded.

### [Solution to Problem]

For solving the problem described above, according to the present disclosure, there is provided an information processing apparatus, including: a broadcast content processing unit that receives and processes a broadcast content; and a controller that acquires an application information table with which suspend information can be set as control information for controlling an application related to the broadcast content, and sets, when the application information table including the suspend information is acquired, an application being executed to a pause state based on the suspend control information.

The information processing apparatus may further include a memory capable of storing information, and the controller may set the application being executed to the pause state by storing the application being executed in the memory for each execution state.

In the information processing apparatus, the controller may cancel, when the application information table including predetermined control information is acquired, the pause state of the application based on the predetermined control information.

According to the present disclosure, there is provided an information processing method including: receiving and processing a broadcast content; acquiring, by a controller, an application information table with which suspend information can be set as control information for controlling an application related to the broadcast content; and setting, by the controller, when the application information table including the suspend information is acquired, an application being executed to a pause state based on the suspend control information.

According to the present disclosure, there is provided a program that causes a computer to function as a controller that acquires an application information table with which suspend information can be set as control information for controlling an application related to a broadcast content, and sets, when the application information table including the suspend information is acquired, an application being executed to a pause state based on the suspend control information.

### [Effect of Invention]

As described above, according to the present disclosure, end control of an application related to a broadcast content can be expanded.

### [Brief Description of Drawings]

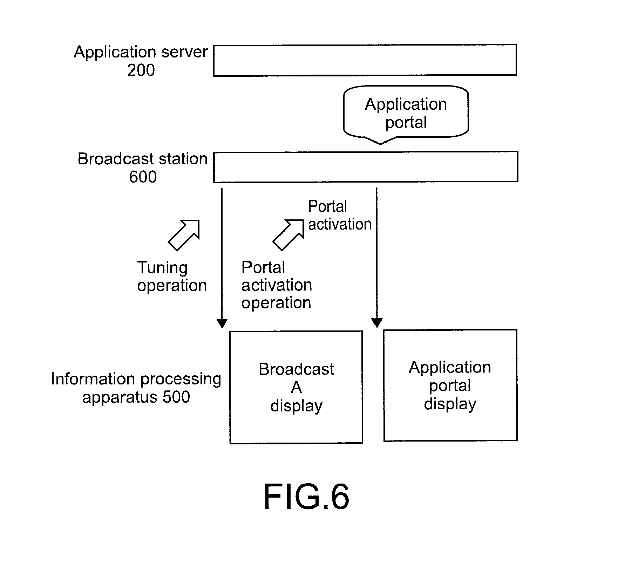

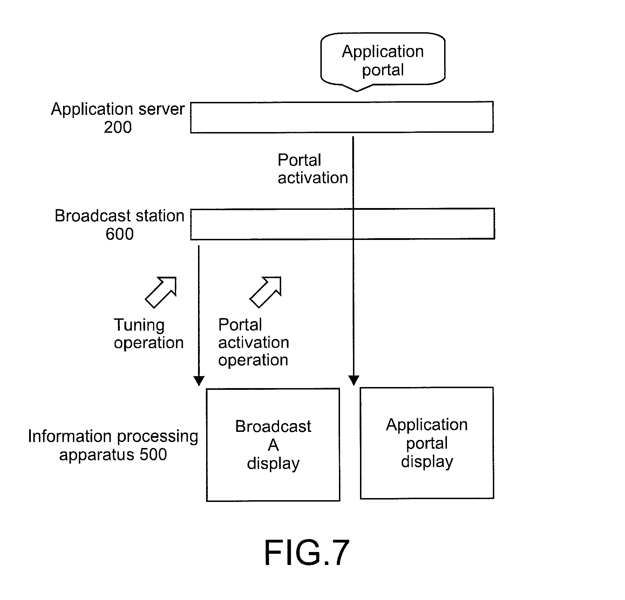

[Fig. 1]
   A diagram showing a general outline of an information processing system of this embodiment.
[Fig. 2]
   A diagram showing an AIT data structure.
[Fig. 3]
   A diagram showing an XML-AIT data structure.
[Fig. 4]
   A diagram showing definitions of application control codes stored in the AIT.
[Fig. 5]
   A block diagram showing a structure of an information processing apparatus of this embodiment.
[Fig. 6]
   A diagram showing a method of activating an application from a broadcast portal screen.
[Fig. 7]
   A diagram showing a method of activating an application from a server portal screen.
[Fig. 8]
   A flowchart showing a procedure of the method of activating an application from the portal screen shown in Figs. 6 and 7.
[Fig. 9]
   A diagram showing a method of activating an application based on a broadcast AIT.
[Fig. 10]
   A flowchart showing a procedure of the method of activating an application based on the broadcast AIT.
[Fig. 11]
   A diagram showing a procedure of the method of activating an application from an application list.
[Fig. 12]
   A flowchart showing the procedure of the method of activating an application from an application list.
[Fig. 13]
   A diagram showing a typical operational example of the information processing system of this embodiment.
[Fig. 14]
   A diagram showing an operational example conforming to a standard in a typical information processing system.
[Fig. 15]
   A diagram showing an application switch operation in the information processing system of this embodiment.

### [Description of Embodiment]

Hereinafter, an embodiment of the present disclosure will be described with reference to the drawings.

### [Information processing system]

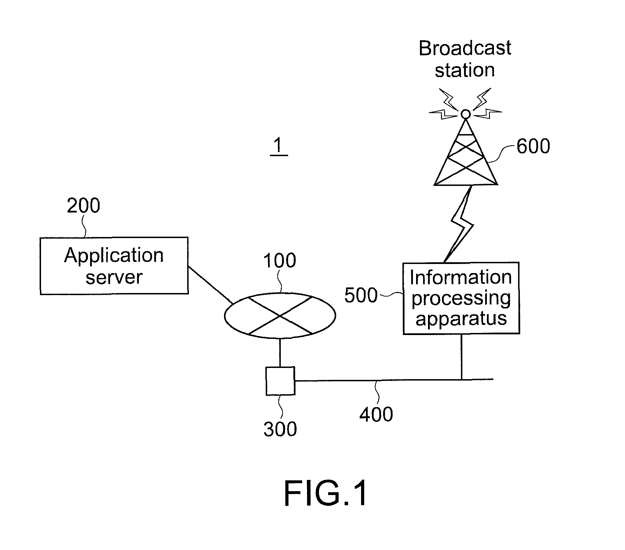

Fig. 1 is a diagram showing a general outline of an information processing system of this embodiment.

The information processing system 1 of this embodiment includes a first network 100 such as the Internet, an application server 200, an edge router 300, a second network 400 such as a LAN (Local Area Network), an information processing apparatus 500, and a broadcast station 600.

The broadcast station 600 transmits digital broadcast signals via a communication medium such as terrestrial, satellite, and IP (Internet Protocol) networks. The broadcast station 600 is capable of multiplexing and transmitting a stream packet of a broadcast content, a packet of an application to be executed simultaneous with a reproduction of the broadcast content, and a PSI/SI (Program Specific Information/Service Information) packet including various types of information related to the broadcast content currently being broadcasted and the application. The PSI/SI includes an application information table (hereinafter, referred to as "AIT") and the like as a data structure constituted of information for managing the application.

The application server 200 is connectable to the first network 100 and capable of delivering, to the information processing apparatus 500 via the first network 100, XML (Extensible Markup Language)-AIT describing a data structure constituted of a file of an application to be executed in relation to a reproduction of a broadcast content and information for managing the application.

The edge router 300 is a router for connecting the first network 100 and the second network 400. The second network 400 may either be in a wired or wireless manner.

The information processing apparatus 500 is, for example, a personal computer, a cellular phone, a smartphone, a television apparatus, or a game device, though a product form thereof is not specifically limited.
The information processing apparatus 500 is capable of receiving and demodulating a digital broadcast signal from the broadcast station 600 to acquire a transport stream. The information processing apparatus 500 is capable of separating a broadcast content from the transport stream, decoding it, and outputting it to a display unit (not shown) or speaker unit (not shown) connected to the information processing apparatus 500 or a recording apparatus.

It should be noted that the display unit, the speaker unit, and the recording apparatus may be integrated with the information processing apparatus 500, or they may be directly connected to the information processing apparatus 500 or indirectly connected via the second network 400 as independent apparatuses. Alternatively, an apparatus (not shown) including the display unit and the speaker unit may be directly connected or indirectly connected to the information processing apparatus 500 via the second network 400.

The information processing apparatus 500 is also capable of extracting an application or PSI/SI including an AIT from the acquired transport stream and interpreting the AIT to thus control the application. When the application is a visible application, the information processing apparatus 500 can synthesize a video signal generated by executing the application with a video signal and subtitle signal of the broadcast content and output them to the display unit.

The information processing apparatus 500 is also capable of acquiring, from the application server 200 via the first network 100, the edge router 300, and the second network 400, the application and the XML-AIT file by download. The information processing apparatus 500 is capable of interpreting the acquired XML-AIT and controlling the application acquired from the application server 200.

### [Application]

Here, an application will be described. The application is supplied to the information processing apparatus 500 from the broadcast station 600 and the application server 200. The application is structured by, for example, an HTML document, a Java (registered trademark) script, a still image file, and a moving image file.

The application may either be visible or invisible. A visible application is an application with which a user can observe its state via a screen. An invisible application is an application with which the user cannot observe its state via the screen and is, for example, a function of recording information for specifying a broadcast content viewed in the information processing apparatus or a viewing time and delivering it to a specific server for the purpose of a rating survey or the like.

Moreover, the application may be a bidirectional application capable of changing information or a function presented according to an operation of the user of the information processing apparatus 500, or may be an application that unidirectionally presents information to the user.

### [Data structures of AIT and XML-AIT]

Here, a data structure of the AIT provided from the broadcast station 600 and a data structure of the XML-AIT provided from the application server 200 will be described. It should be noted that when simply referred to as "AIT" in the specification, the term refers to the AIT provided from the broadcast station 600.

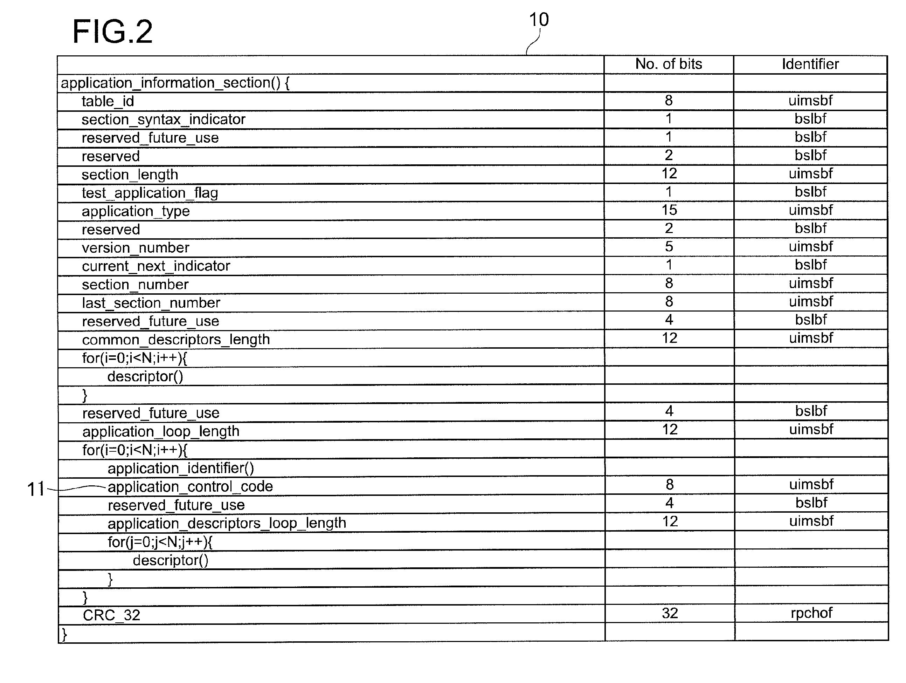

Fig. 2 is a diagram showing the AIT data structure.
The AIT 10 is a table that stores various types of information related to broadcast-linked applications, application control codes for controlling the broadcast-linked applications, and the like. Specifically, the AIT 10 stores a table ID, a section syntax instruction, a section length, an application format, a version number, a current next instruction, a section number, a final section number, a common descriptor loop length, an application information loop length, an application identifier, an application control code 11, an application information descriptor loop length, a descriptor, and the like.

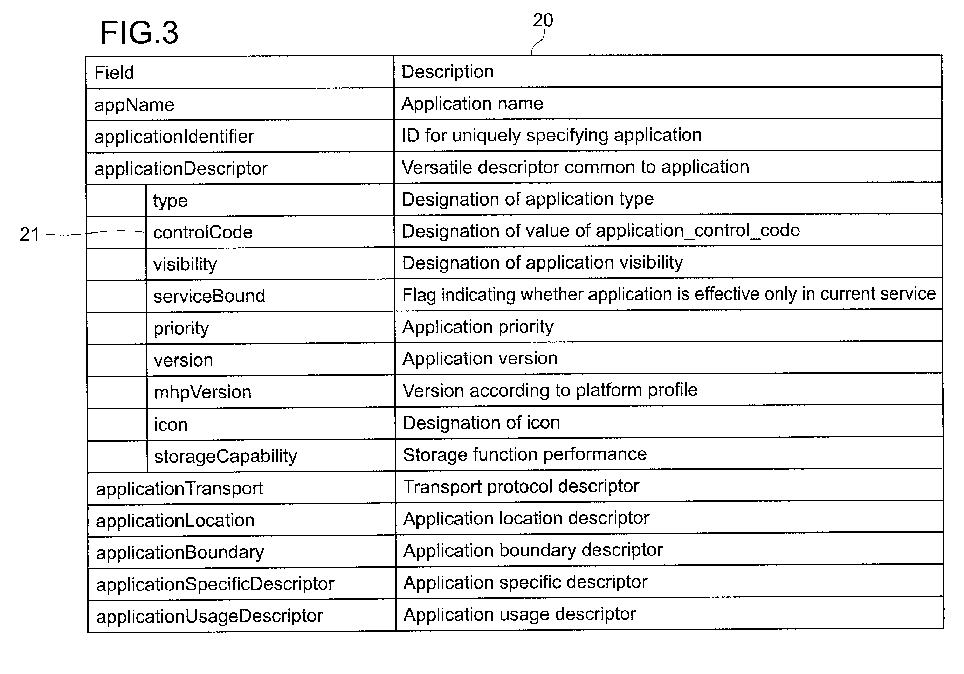

Fig. 3 is a diagram showing the XML-AIT data structure.
The XML-AIT 20 is a table that stores various types of information related to broadcast-unlinked applications, application control codes for controlling the broadcast-unlinked applications, and the like. Specifically, the XML-AIT 20 stores an application name, an application identifier, an application descriptor, an application type, an application control code 21, an application visibility, a flag indicating whether an application is effective in only the current service, an application priority, an application version, a version according to platform profile, an icon, storage function performance, a transport protocol descriptor, an application location descriptor, an application boundary descriptor, an application specific descriptor, an application usage descriptor, and the like.

### [Definitions of application control codes]

A life cycle of an application is dynamically controlled by the information processing apparatus 500 based on the application control codes 11 and 21 respectively stored in the AIT 10 and the XML-AIT 20.

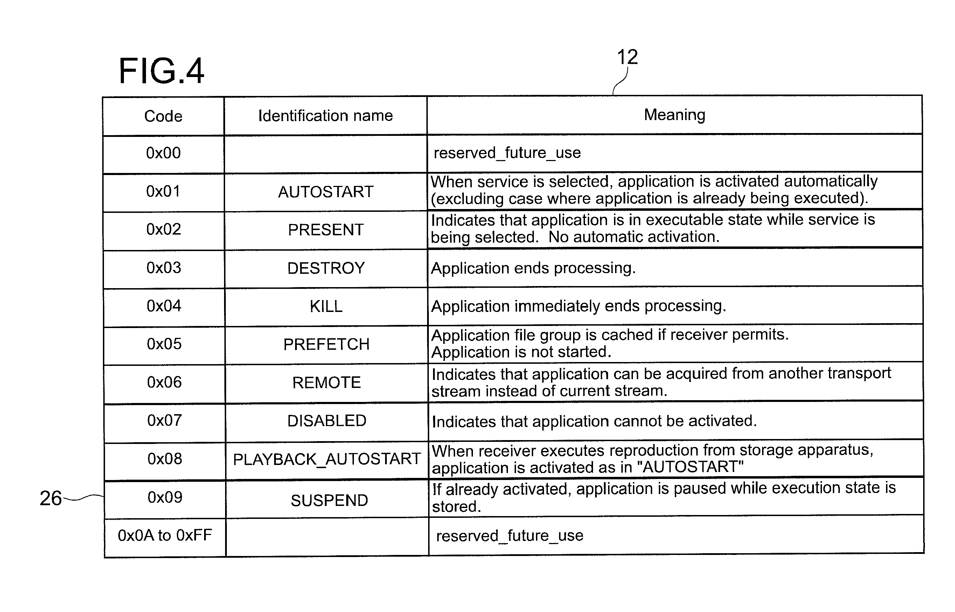

Fig. 4 is a diagram showing definitions of the application control codes 11 and 21 respectively stored in the AIT 10 and the XML-AIT 20. As shown in the figure, as the application control codes, there are "AUTOSTART", "PRESENT", "DESTROY", "KILL", "PREFETCH", "REMOTE", "DISABLED", and "PLAYBACK_AUTOSTART" as the standard. In this embodiment, "SUSPEND" is newly added. The definitions of the application control codes are as follows.

"AUTOSTART" is a code that instructs to automatically activate an application along with a service selection, provided that the application is not yet executed. "PRESENT" is a code that instructs to set an application to an executable state while the service is being selected. It should be noted that a target application is not automatically activated along with the service selection and is activated upon reception of an activation instruction from the user.
"DESTROY" is a code that instructs to permit an end of an application.
"KILL" is a code that instructs to forcibly end an application.
"PREFETCH" is a code that instructs to cache an application.
"REMOTE" is a code indicating that an application is an application that cannot be acquired in a current transport stream. Such an application becomes usable when acquired from another transport stream or a cache.
"DISABLED" is a code indicating that an application activation is prohibited.
"PLAYBACK_AUTOSTART" is a code for activating an application along with a reproduction of a broadcast content recoded onto a storage (recording apparatus). "SUSPEND" is a code that is newly introduced in this embodiment and instructs to pause an execution of an application being executed while storing its execution state.

### [Application activation]

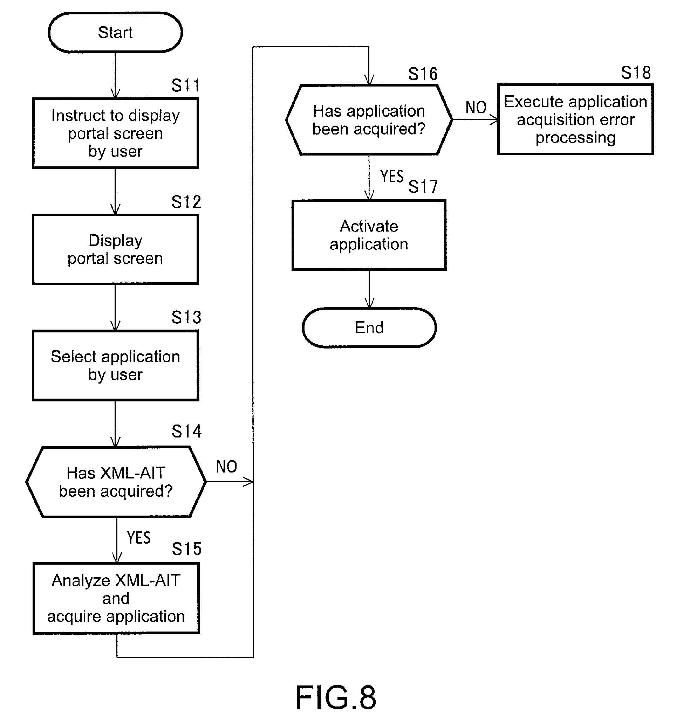

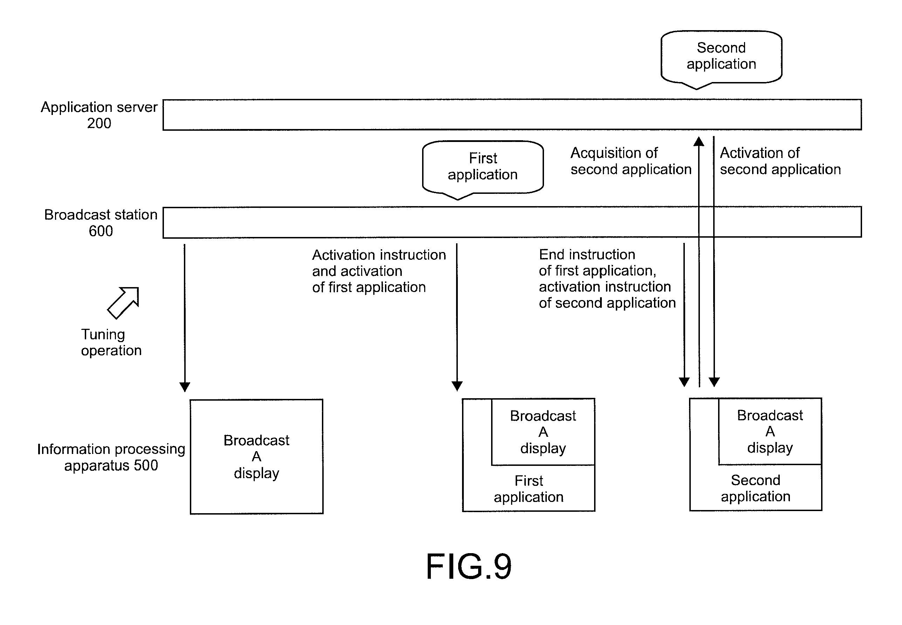

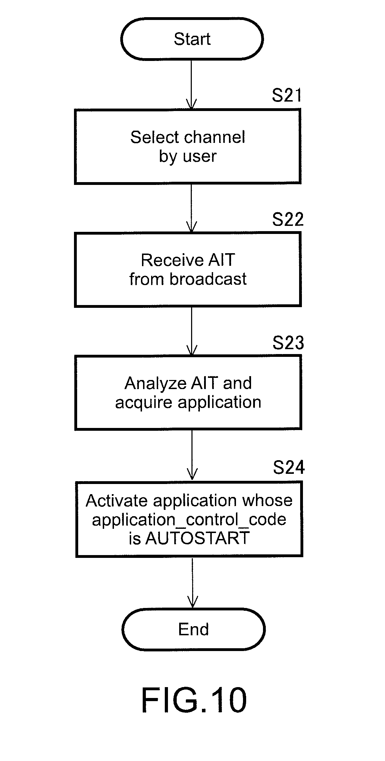

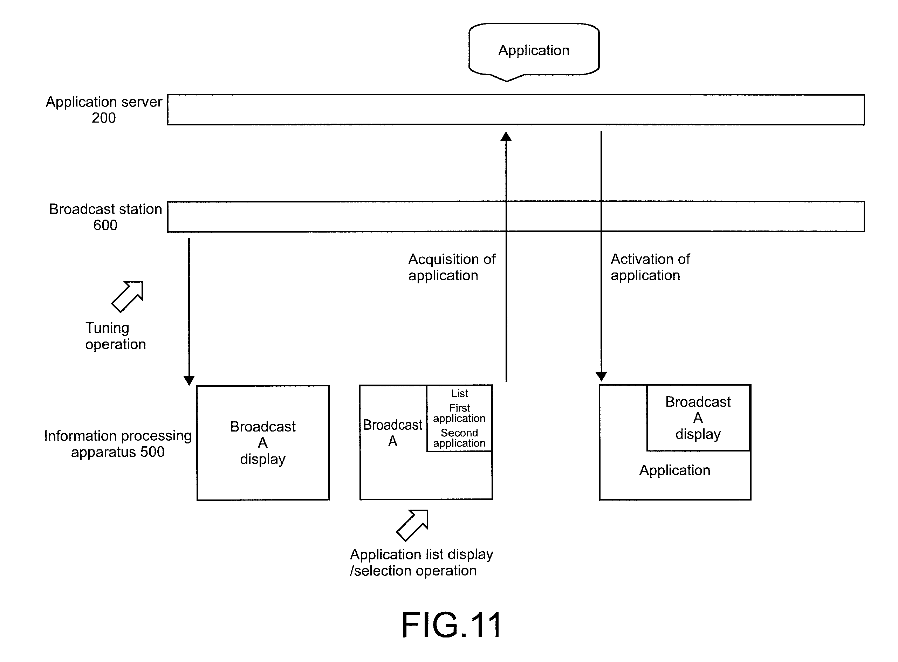

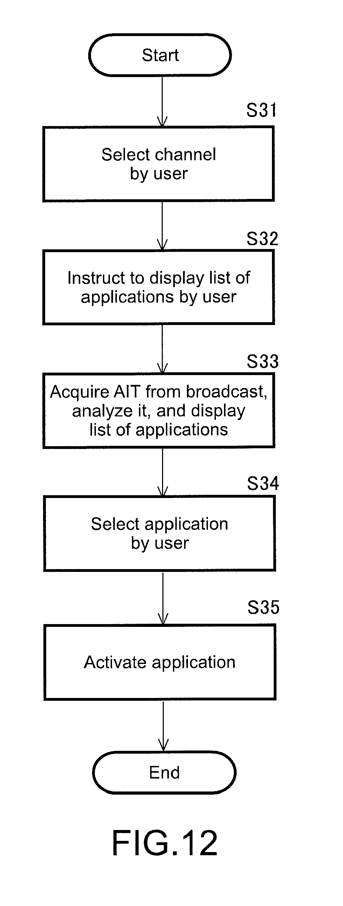

There are the following application activation methods, for example.
1. A method of acquiring, with a predetermined remote controller operation made by the user of the information processing apparatus 500 as a trigger, an application portal screen by broadcast or from the application server 200 and displaying it, and activating an application selected by the user on the portal screen as shown in Figs. 6 and 7. One or more pieces of usable application information are presented on the application portal screen. Associated with the presented application information are a substantive file of the application and a communication protocol or location information requisite for acquiring an XML-AIT of the application. As shown in Fig. 8, when an activation of a portal screen is instructed by a predetermined remote controller operation or the like made by the user of the information processing apparatus 500 (Step S11), the information processing apparatus 500 acquires an application portal screen by broadcast or from the application server 200 and displays it (Step S12). When desired application information is selected by the user on the portal screen (Step S 13) and when information requisite for acquiring a substantive file of the application is associated with the application information (NO in Step S 14), the information processing apparatus 500 acquires the substantive file of the application based on the information (YES in Step S16) and activates the application (Step S17). Moreover, when information requisite for acquiring an XML-AIT of the application is associated with the selected application information, the information processing apparatus 500 acquires and analyzes the XML-AIT based on the information (YES in Step S14), acquires the substantive file of the application based on the XML-AIT (Step S 15), and activates the application (Step S 17). When the XML-AIT is acquired or the acquisition of the substantive file of the application ends in a failure, error processing of presenting such a content to the user, or the like is carried out (Step S18).
2. A method of automatically activating an application based on an application control code "AUTOSTART" in the AIT as shown in Fig. 9. As shown in Fig. 10, when a channel is selected by a predetermined remote controller operation made by the user of the information processing apparatus 500 (Step S21), the information processing apparatus 500 acquires an AIT transmitted while being superimposed on a broadcast content from broadcast waves of the channel (Step S22). The information processing apparatus 500 analyzes the acquired AIT and acquires an application based on information for acquiring the application in the AIT (Step S23), and causes the application to be automatically activated based on the application control code "AUTOSTART" (Step S24).
3. A method of creating and displaying, with a predetermined remote controller operation as a trigger, icons or a list of currently-usable applications based on an AIT and prompting the user to select an application to activate therefrom as shown in Fig. 11. As shown in Fig. 12, when a channel is selected by a predetermined remote controller operation made by the user of the information processing apparatus 500 (Step S31), the information processing apparatus 500 acquires an AIT transmitted while being superimposed on a broadcast content from broadcast waves of the channel (Step S32). When display of the list of usable applications is instructed by a predetermined remote controller operation made by the user, the information processing apparatus 500 displays the list of applications based on the acquired AIT (Step S33). When a desired application is selected by the user from the list of applications (Step S34), the application is activated based on the AIT of the application (Step S35).

### [Typical operational example of information processing system 1]

Next, an operational example of the information processing system 1 of this embodiment will be described.

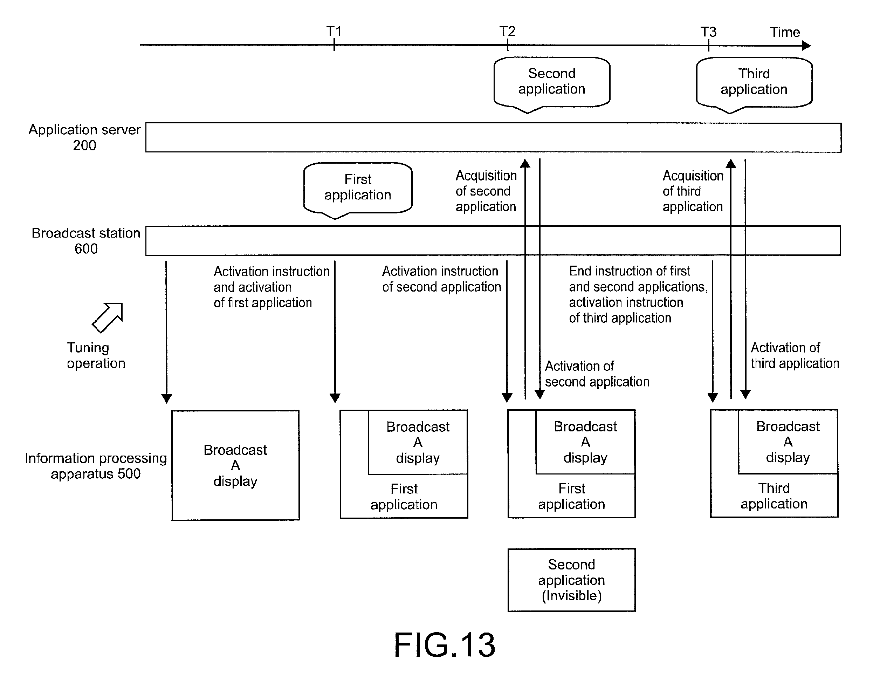

Fig. 13 is a diagram showing a typical operational example of the information processing system 1 shown in Fig. 1.

The information processing apparatus 500 receives a broadcast content (broadcast A) from the broadcast station 600 selected by the user using a remote controller, for example, carries out decoding processing on video data, audio data, subtitle data, and the like, and outputs the broadcast content (broadcast A) to the display unit and speaker unit connected to the information processing apparatus 500.

In this example, a broadcast-linked application (hereinafter, referred to as "first application") and an AIT related to the first application are superimposed on the broadcast content and broadcasted from the broadcast station 600 at a time T1.

The AIT stores the application control code "AUTOSTART" that instructs to activate the first application. Upon receiving the first application and the AIT, the information processing apparatus 500 activates the first application based on the application control code "AUTOSTART" described in the AIT. The activated first application is visualized as a window superimposed on a video of the broadcast content A displayed on the display unit, for example.

Subsequently, at a time T2, a new AIT including an application control code "AUTOSTART" that instructs to activate a broadcast-unlinked application (hereinafter, referred to as "second application") is superimposed on the broadcast content and broadcasted from the broadcast station 600.

Upon receiving the new AIT, the information processing apparatus 500 acquires the second application based on the application control code "AUTOSTART" described in the new AIT and activates it. Here, the second application is an application including an invisible attribute, and the first application is displayed as it is on the display unit of the information processing apparatus 500.

Next, at a time T3, a new AIT including an application control code "DESTROY" or "KILL" that instructs to end the first application and the second application and an application control code "AUTOSTART" that instructs to activate another broadcast-unlinked application (hereinafter, referred to as "third application") is superimposed on the broadcast content and broadcasted from the broadcast station 600.

Upon receiving the new AIT, the information processing apparatus 500 ends the first application and the second application and acquires and activates the third application.

### [Operational example conforming to standard in typical information processing system]

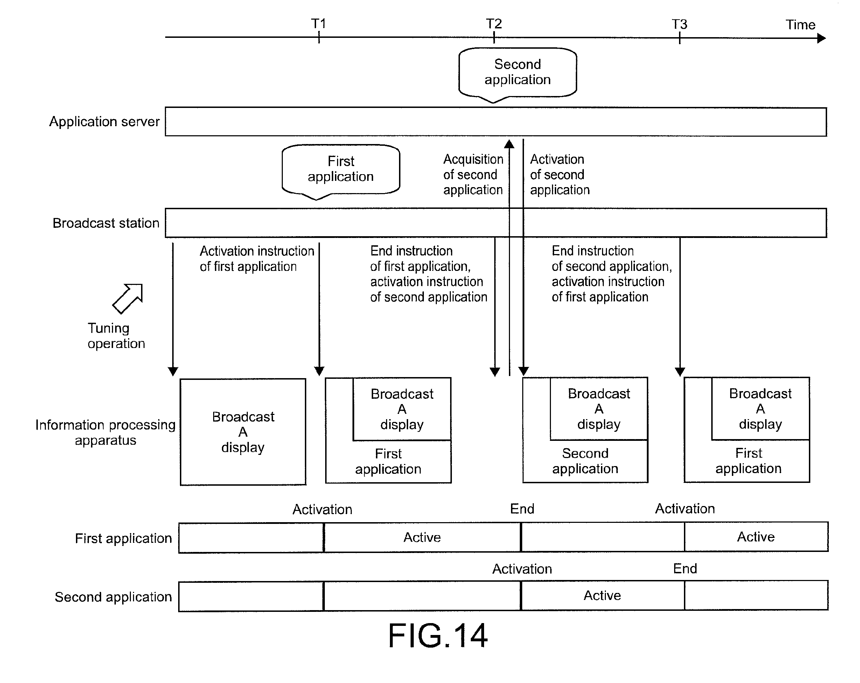

Fig. 14 is a diagram showing an operational example conforming to a standard in a typical information processing system.

The information processing apparatus receives a broadcast content (broadcast A) from the broadcast station selected by the user, carries out decoding processing on video data, audio data, subtitle data, and the like, and outputs the broadcast content (broadcast A) to the display unit and speaker unit connected to the information processing apparatus.

At a time T1, a broadcast-linked application (hereinafter, referred to as "first application") and an AIT related to the first application are transmitted by broadcast from the broadcast station. The AIT stores the application control code "AUTOSTART" that instructs to activate the first application. Upon receiving the first application and the AIT, the information processing apparatus activates the first application based on the application control code "AUTOSTART" described in the AIT. The activated first application is visualized as a window superimposed on a video of the broadcast content A displayed on the display unit, for example.

Subsequently, at a time T2, a new AIT including an application control code "DESTROY" or "KILL" that instructs to end the first application and an application control code "AUTOSTART" that instructs to activate another broadcast-unlinked application (hereinafter, referred to as "second application") is broadcasted from the broadcast station. Upon receiving the new AIT, the information processing apparatus ends the first application being executed based on the application control code "DESTROY" or "KILL" described in the AIT and activates the second application based on the application control code "AUTOSTART". The applications to be executed are switched as described above.

When the application is ended, the application including the information on its execution state is deleted from the memory of the information processing apparatus. Therefore, even when the information processing apparatus acquires a new AIT including the application control code "AUTOSTART" that instructs to activate the first application again and activates the first application based on the AIT at a time T3, the first application is activated only from an initial state.

In this embodiment, for solving such a problem, "SUSPEND" (reference numeral 26 in Fig. 3) is newly added to the set of application control codes as a standard of the AIT as shown in Fig. 3. "SUSPEND" is an application control code that instructs to pause an execution of an application being executed while storing an execution state thereof in the memory.

### [Structure of information processing apparatus]

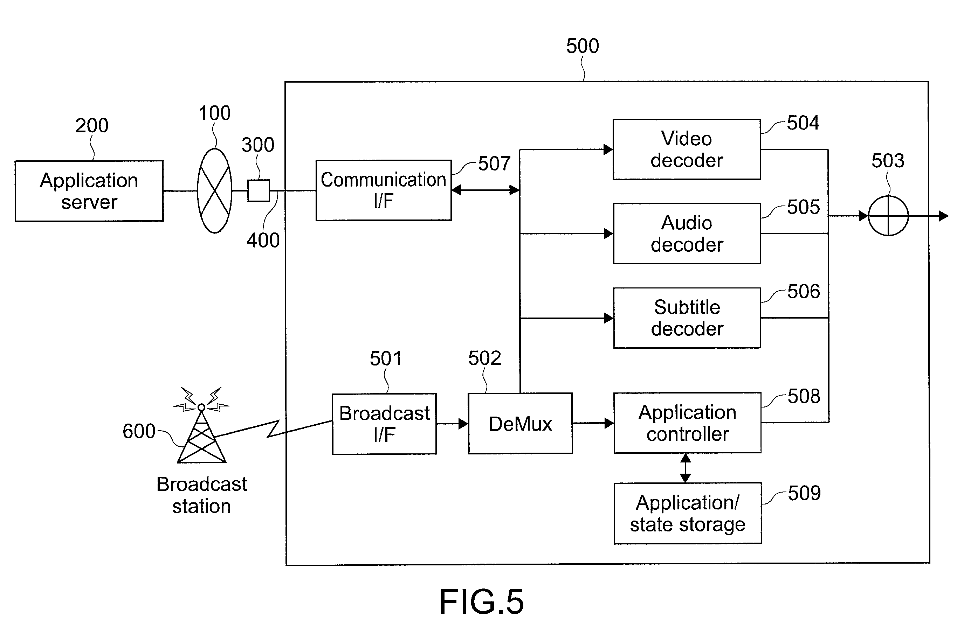

Fig. 5 is a block diagram showing a structure of the information processing apparatus 500 of this embodiment.

The information processing apparatus 500 includes a broadcast interface 501, a demultiplexer 502, an output processing unit 503, a video decoder 504, an audio decoder 505, a subtitle decoder 506, a communication interface 507, an application controller 508, and an application/state storage 509.

The broadcast interface 501 includes an antenna and a tuner and uses them to receive digital broadcast signals selected by the user. The broadcast interface 501 outputs a transport stream acquired by carrying out demodulation processing on the received digital broadcast signals to the demultiplexer 502.

The demultiplexer 502 separates a stream packet of a broadcast content, an application packet, and an AIT packet from the transport stream. The demultiplexer 502 separates a video ES (Elementary Stream), an audio ES, and a subtitle ES from the stream packet of the broadcast content. The demultiplexer 502 distributes the video ES to the video decoder 504, the audio ES to the audio decoder 505, the subtitle ES to the subtitle decoder 506, and the application packet and the AIT packet to the application controller 508.

The video decoder 504 decodes the video ES to generate a video signal and outputs the generated video signal to the output processing unit 503. The audio decoder 505 decodes the audio ES to generate an audio signal and outputs the generated audio signal to the output processing unit 503. The subtitle decoder 506 decodes the subtitle ES to generate a subtitle signal and outputs the generated subtitle signal to the output processing unit 503.

The communication interface 507 is an interface for establishing communication with an external apparatus via the second network 400 such as a LAN. The communication interface 507 may take either wireless communication or wired communication.

The application controller 508 is a controller that carries out processing related to control of applications.

The application/state storage 509 (memory) is a storage that stores an acquired application, an application being executed and a state thereof, an application being paused and an execution state thereof, and the like.

The output processing unit 503 synthesizes the video signal from the video decoder 504, the audio signal from the audio decoder 505, the subtitle signal from the subtitle decoder 506, the video signal and audio signal from the application controller 508, and the like and outputs the resultant to the recording apparatus, display unit, and speaker unit (not shown) connected to the information processing apparatus 500.

A part or all of the structure including at least the application controller 508 and the application/state storage 509 of the information processing apparatus 500 can be provided by a computer including a CPU (Central Processing Unit) and a memory and a program.

### [Application switch operation of information processing system 1 of this embodiment]

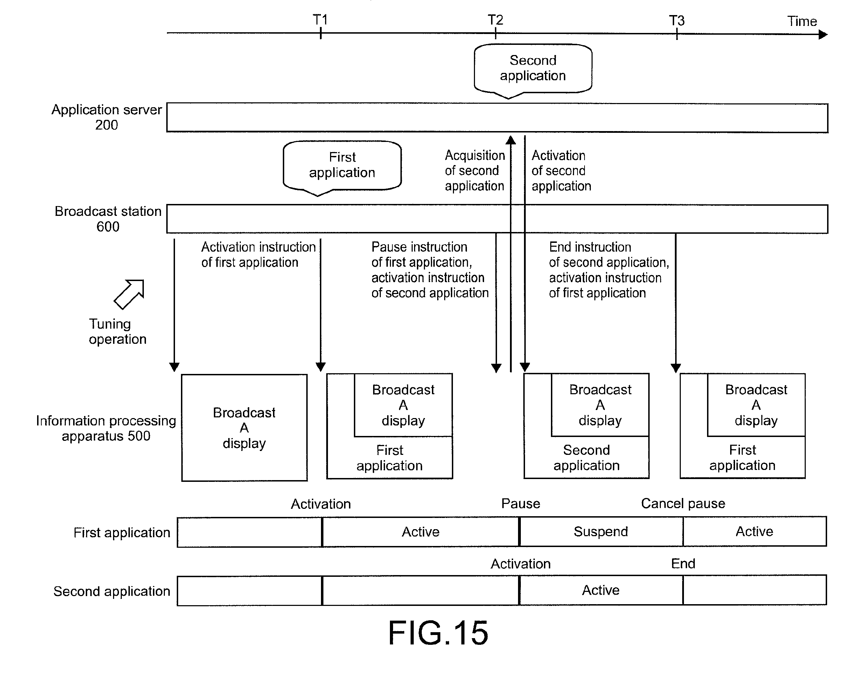

Fig. 15 is a diagram showing an application switch operation in the information processing system 1 of this embodiment.

The information processing apparatus 500 receives a broadcast content (broadcast A) from the broadcast station 600 selected by the user using a remote controller, for example, carries out decoding processing on video data, audio data, subtitle data, and the like, and outputs the broadcast content (broadcast A) to the display unit and speaker unit connected to the information processing apparatus 500.

Specifically, the broadcast interface 501 receives digital broadcast signals of the broadcast content (broadcast A) from the broadcast station 600 selected by the user and outputs a transport stream acquired by carrying out demodulation processing or the like to the demultiplexer 502. The demultiplexer 502 separates a stream packet of the broadcast content from the transport stream and additionally separates the stream packet of the broadcast content into a video ES, an audio ES, and a subtitle ES. The separated video ES, audio ES, and subtitle ES are decoded by the video decoder 504, the audio decoder 505, and the subtitle decoder 506, respectively, synthesized by the output processing unit 503, and output to the display unit and the speaker unit.

In this operational example, a broadcast-linked application (hereinafter, referred to as "first application") and an AIT related to the first application are superimposed on the broadcast content and broadcasted from the broadcast station 600 at a time T1. The AIT stores the application control code "AUTOSTART" that instructs to activate the first application.

The demultiplexer 502 separates the packet of the first application and the AIT packet from the transport stream and supplies them to the application controller 508. Upon receiving the broadcast-linked application and AIT, the application controller 508 activates the first application based on the application control code "AUTOSTART" described in the AIT. Specifically, the application controller 508 develops the acquired application in the application/state storage 509 as the memory of the system and sets it to an executed state. The activated first application is visualized as a window superimposed on a video of the broadcast content A displayed on the display unit, for example.

Subsequently, at a time T2, a new AIT including an application control code "SUSPEND" that instructs to pause the first application and "AUTOSTART" that instructs to activate a broadcast-unlinked application (hereinafter, referred to as "second application"), for example, is broadcasted from the broadcast station 600.

Upon acquiring the new AIT, the application controller 508 of the information processing apparatus 500 pauses the first application being executed while storing an execution state thereof based on "SUSPEND" stored in the AIT as the application control code with respect to the first application. Specifically, the application controller 508 pauses the first application developed in the application/state storage 509 while keeping the execution state. Subsequently, the application controller 508 activates the second application based on "AUTOSTART" described in the acquired AIT as the application control code with respect to the second application. It should be noted that in the AIT, information related to a communication protocol, location information, and the like that are requisite for accessing the application server 200 and acquiring a broadcast-unlinked application are set.

Next, at a time T3, a new AIT including an application control code "DESTROY" or "KILL" that instructs to end the second application and an application control code "AUTOSTART" that instructs to activate the first application in the pause state or the application control code "PRESENT" that instructs to set the first application to an executable state is broadcasted from the broadcast station 600.

Upon receiving the new AIT, the application controller 508 of the information processing apparatus 500 ends the second application based on "DESTROY" or "KILL" described in the AIT as the application control code with respect to the second application. Further, the application controller 508 restores the first application from the pause state based on "AUTOSTART" or "PRESENT" described in the acquired AIT as the application control code with respect to the first application. As a result, the first application is activated from the state right before being paused last time.

As described above, according to this embodiment, in the information processing system capable of controlling an application related to a broadcast content based on an AIT, "SUSPEND" is newly added to the set of application control codes as the ETSI standard. By executing "SUSPEND", a new function of setting an application from an executed state to a pause state can be added. As a result, control involving storing a processing result up to an application end point and resuming processing while taking over the past processing result when the application is activated next time can be realized.
Moreover, since there is no need to acquire the application in restoring the application from the pause state, the application can be activated and used more speedily.

It should be noted that in the embodiment above, the case where the first application acquired by broadcast is set to a pause state has been described. However, it is of course possible to similarly set an application acquired from the application server 200 (second application) to a pause state.

Furthermore, although the embodiment above has described the case of setting one application to a pause state, a plurality of applications can of course be set to a pause state.

The present disclosure it not limited to the embodiment above and can be variously modified without departing from the gist of the present disclosure.
The embodiment has been described presupposing that the HbbTV standard is used. However, the present disclosure is not necessarily limited to such a presupposition.

It should be noted that the present disclosure may also take the following structures.
(1) An information processing apparatus, including:
   a broadcast content processing unit that receives and processes a broadcast content; and
   a controller that acquires an application information table with which suspend information can be set as control information for controlling an application related to the broadcast content, and sets, when the application information table including the suspend information is acquired, an application being executed to a pause state based on the suspend control information.
(2) The information processing apparatus according to (1) above, further including
   a memory capable of storing information,
   in which the controller sets the application being executed to the pause state by storing the application being executed in the memory for each execution state.
(3) The information processing apparatus according to (1) or (2) above,
   in which the controller cancels, when the application information table including predetermined control information is acquired, the pause state of the application based on the predetermined control information.

### [Reference Signs List]

- 1: information processing system
- 10: AIT
- 12: application control code
- 20: AIT
- 21: application control code
- 200: application server
- 500: information processing apparatus
- 501: broadcast interface
- 502: demultiplexer
- 503: output processing unit
- 504: video decoder
- 505: audio decoder
- 506: subtitle decoder
- 507: communication interface
- 508: application controller
- 509: application/state storage
- 600: broadcast station

## Claims

1. An information processing apparatus, comprising:
a broadcast content processing unit that receives and processes a broadcast content; and
a controller that acquires an application information table with which suspend information can be set as control information for controlling an application related to the broadcast content, and sets, when the application information table including the suspend information is acquired, an application being executed to a pause state based on the suspend control information.

2. The information processing apparatus according to claim 1, further comprising
a memory capable of storing information,
wherein the controller sets the application being executed to the pause state by storing the application being executed in the memory for each execution state.

3. The information processing apparatus according to claim 2,
wherein the controller cancels, when the application information table including predetermined control information is acquired, the pause state of the application based on the predetermined control information.

4. An information processing method, comprising:
receiving and processing a broadcast content;
acquiring, by a controller, an application information table with which suspend information can be set as control information for controlling an application related to the broadcast content; and
setting, by the controller, when the application information table including the suspend information is acquired, an application being executed to a pause state based on the suspend control information.

5. A program that causes a computer to function as a controller that acquires an application information table with which suspend information can be set as control information for controlling an application related to a broadcast content, and sets, when the application information table including the suspend information is acquired, an application being executed to a pause state based on the suspend control information.
